# EUROPÄISCHE PATENTANMELDUNG

(11) **EP 2 881 474 A1**
(43) Veröffentlichungstag der Anmeldung: **10.06.2015**
(21) Anmeldenummer: 13005614.6
(22) Anmeldetag: 03.12.2013
(51) Int. Cl.: C21B 5/02, C21C 1/08, B09B 3/00

(54) **Verfahren zur Verwertung von Feuerlöschpulver der Brandklasse BC**

(71) Anmelder: SAXONIA Edelmetalle GmbH, 09633 Halsbrücke (DE)
(72) Erfinder: Ehnert, Rayko, 09599 Freiberg OT Zug (DE); Teubel, Erik, 09599 Freiberg (DE); Fiedler, Karl-Heinz, 01683 Nossen (DE)

(57) **Zusammenfassung**

Die Erfindung betrifft ein Verfahren zur Verwertung von Feuerlöschpulver der Brandklasse BC, das im Wesentlichen aus Alkalihydrogencarbonat besteht, indem es in der thermischen Metallurgie bei der Aufarbeitung von NE-metallhaltigen Rohstoffen zur Senkung des Schmelzpunktes der Schlacke anstelle von technischer Soda verwendet wird. Damit entfallen aufwändige Entsorgungswege, die It. Kreislaufwirtschafts- und Abfallgesetz für dieses bisher als Abfall deklarierte BC-Feuerlöschpulver, welches aus ausgewechselten Feuerlöschern stammt, notwendig waren. Damit wird eine effiziente, umweltfreundliche Verwertung anstelle kostenintensiver Entsorgung / Vernichtung von BC-Pulver erzielt.

## Beschreibung

Die Erfindung betrifft die Nutzung von ausgesondertem Feuerlöschpulver der Brandklasse BC

Zur Bekämpfung von Bränden der Brandklassen A (Brände fester Stoffe), B (Brände flüssiger und flüssig werdender Stoffe) und C (Brände gasförmiger oder gasförmig werdender Stoffe) kommen Pulverlöschmittel zum Einsatz. Diese werden nach ihren Einsatzmöglichkeiten in ABC- und BC-Pulver unterschieden. Durch die Hauptkomponente Phosphate des ABC-Pulvers wurde frühzeitig mit der Erprobung alternativer Entsorgungs- und Verwertungswege begonnen. Hier gilt als Stand der Technik der Einsatz in der Landwirtschaft und in Kompostieranlagen bzw. allgemein die Verwertung zwecks Erzeugung von Düngemitteln bzw. von Düngemittelersatzstoffen.

Im Bereich der BC-Pulver erfolgten keine derartigen Entwicklungen, da die Möglichkeiten der Wiederverwertung insbesondere wegen der unterschiedlichen Zusammensetzung des Abfallpulvers eingeschränkt sind. Nach geltenden Richtlinien ist die früher ebenfalls praktizierte Ausbringung als Düngemittelzusatz gegenwärtig nicht mehr gestattet. Ein Vermischen von ABC- und BC-Pulver ist unzulässig wegen bestehender Gefahren durch unkontrollierbare chemische Reaktionen, z.B. die Freisetzung von Ammoniak (NH₃).

Je nach Hersteller besteht BC-Pulver aus unterschiedlichen Anteilen und Zusammensetzungen, im Wesentlichen aus Natrium- und Kaliumhydrogencarbonat, Kaliumsulfat, Natrium- und Kaliumchlorid und Kalium-Ammonium-Carbamat. Zusätzlich sind Verbindungen zur Hydrophobierung dieses sehr feinen Pulvers enthalten, wie Silikone, Wachse, Metallseifen, um eine Benetzbarkeit und eine Verklumpung zu verhindern . Jährlich werden große Mengen an neuem BC-Pulver produziert, um jene Feuerlöscher auszutauschen, die entsprechend gesetzlicher Bestimmungen turnusmäßig ausgewechselt werden müssen oder nicht mehr den geltenden Standards entsprechen. Damit fallen analog große Mengen BC-Pulver an, die aus der Kontrolle und dem damit verbundenen Ersatz von Feuerlöschern resultieren. BC-Pulver gilt nach den Richtlinien des Bundesverbandes Technischer Brandschutz e. V. und nach dem Kreislaufwirtschafts- und Abfallgesetz - KrW-/AbfG - als Abfall und ist als solcher zu behandeln und von entsprechend behördlich zugelassenen Firmen zu entsorgen.

Die derzeit gebräuchlichsten Entsorgungswege für verbrauchtes BC-Pulver sind auf Grund seiner geringen Wasserlöslichkeit die Deponierung in geeigneten, gegen Flüssigkeitsaustritt grundabgedichteten Deponien und die Einlagerung in Untertagedeponien. Nachteile dieser Verwahrensweise sind die Inanspruchnahme sicherlich sinnvoller nutzbaren Deponieraums, die Notwendigkeit eines Schutzes gegen Verstaubung dieser feinsten Partikel, der Aufwand für die Abdichtung und Sicherung jeglicher Deponie und die damit insgesamt entstehenden hohen Kosten für die Entsorgung von Feuerlöschpulver der Brandklasse BC.

Auch die thermische Entsorgung in zugelassenen Müllverbrennungsanlagen wird angewendet, obwohl diese Art der Mitverbrennung endotherm erfolgt und Energie aufgewendet werden muss. Hier bestehen die Nachteile ebenfalls in hohen Kosten für die Entsorgung, ohne dass das BC-Pulver damit einer wirtschaftlich sinnvollen Verwertung zugeführt werden konnte.

Eine Verwertung von BC-Pulver wird in Patent DE 100 63 918 B4 beschrieben. Hierbei wird das verbrauchte BC-Pulver mit Tensiden in einer wässrigen Lösung dispergiert und gelöst, wobei zum weiteren Aufschluss eine Säure, z.B. Phosphorsäure, zugegeben wird. Die über dieses Verfahren erzeugte Lösung soll dann als Zusatz für Düngemittel oder als Feuerschutzmittel bei speziell auf Zellulose basierenden Holzwerkstoffen Anwendung finden. Nachteile dieses recht zeit- und energieaufwendigen Verfahrens bestehen in der Notwendigkeit einer Behandlung unter Zugabe weiterer Substanzen (Tensiden und Säuren), einer schwierigen Verfahrenssteuerung beim Neutralisationsprozess durch Schaumbildung, Temperaturreglement, pH-Wert-Kontrolle und der weiterhin verbleibenden und zu entsorgenden Restmenge von bis zu 15% der Ausgangsmenge. Außerdem ist mit diesem Verfahren nur ein geringer Bruchteil der anfallenden Menge an BC-Pulver nutzbar.

In DE 196 43 249 B4 wurde vorgeschlagen, Feuerlöschpulver als Zusatzstoff in Farben, Dichtstoffen, Klebern und Beschichtungsmassen einzusetzen. Diese Verwendung ist mengenmäßig jedoch ebenfalls sehr begrenzt und erfordert zudem eine ständige Analyse der jeweiligen Pulvercharge, um eine stabile Qualität des jeweils vorgesehenen Endproduktes gewährleisten zu können.

Nach dem im deutschen Kreislaufwirtschafts- und Abfallgesetz festgehaltenen Gedanken zur Vermeidung von Abfall, zur Schonung natürlicher Ressourcen und zum Schutz von Mensch und Natur ist jede stoffliche Verwertung einer Deponierung oder Vernichtung durch Verbrennung vorzuziehen. Der Gesetzgeber geht dabei noch einen Schritt weiter, indem er festlegt: "Die Pflicht zur Verwertung von Abfällen ist einzuhalten, soweit das technisch möglich und wirtschaftlich zumutbar ist, insbesondere wenn für einen gewonnenen Stoff oder eine gewonnene Energie ein Markt vorhanden ist oder geschaffen werden kann."

Aufgabe dieser Erfindung ist es demgemäß ein Verfahren vorzuschlagen , das eine wirtschaftliche und technisch sinnvolle Nutzung von verbrauchtem Feuerlöschpulver, insbesondere der Brandklasse BC, gewährleistet und das eine Deponierung, Müllverbrennung oder aufwendige Vorbehandlung unnötig macht.

Erfindungsgemäß wurde ein Verfahren entwickelt, welches das zwecks Senkung des Schmelzpunktes und zur Verbesserung von Schlacke im metallurgischen Bereich eingesetztes Alkalicarbonat (Soda) durch Nutzung von Feuerlöschpulver, vorzugsweise der Brandklasse BC, ersetzt. Durch die Verwendung des BC-Pulvers für bekannte Prozesse der thermischen Metallurgie ergibt sich überraschend ein effektiver Einsatz von Feuerlöschpulver. BC-Pulver muss keiner Deponierung, Vernichtung durch thermische Entsorgung in speziellen Verbrennungsanlagen oder einer aufwendigen Vorbehandlung unterzogen werden. Der positive Haupteffekt ist der teilweise oder vollständige Ersatz und der damit verbundene ökonomische Vorteil, der sich aus der Einsparung der bisher benötigten Mengen an Soda, d.h. an Natrium- bzw. Kaliumcarbonat und/oder -hydrogencarbonat ergibt.

Erfindungsgemäß ist Soda durch BC-Pulver im stöchiometrischen Verhältnis von 3 : 1 bis 1 : 10 ersetzbar. Das Masseverhältnis von metallhaltigem und/oder sonstigem Rohstoff zu BC-Pulver ist in einem breiten Bereich von 1000 : 1 bis 1 : 10 anwendbar. Als Rohstoffe kommen insbesondere nichteisenmetallhaltige Materialien infrage, die bekanntermaßen durch ein schmelzmetallurgisches Verfahren dem Recycling zugeführt werden müssen.

Erfindungsgemäß wird BC-Pulver anstelle von technischer Soda dem zu schmelzenden Material vor Zugabe in den Schmelzprozess beigemischt. Durch seine sehr feine Partikelgröße sind eine gute Vermischung und ein Transport durch die dem Fachmann bekannten Fördertechniken problemlos möglich. Die durch die Zugabe von Soda (Natriumcarbonat) als Flussmittel metallurgisch beabsichtigte Senkung des Schmelzpunktes der Schlacke wird durch den Einsatz von BC-Pulver gleichwertig erreicht. Ebenfalls wird durch BC-Pulver eine Verbesserung der Schlacke hinsichtlich ihrer Zusammensetzung bezüglich relevanter Restgehalte an Wertmetallen erzielt.

### Beispiel: (PGM - Metalle sind Metalle der Platingruppe)

Verschiedenste Materialien z.B. auf Basis Aluminiumoxid / Siliziumoxid (Anteil > 75%) mit einem Anteil an PGM - Metallen, im Bereich von 0,05 - 2 %, und diversen metallische Verunreinigungen wurden einer vergleichenden metallurgischen Bearbeitung unterzogen. Dabei wurden je 20 kg des Materials zum Einen mit herkömmlicher Soda (6 kg / 20kg) und zum Anderen mit BC-Pulver (8,5 kg / 20 kg) verarbeitet. Die jeweils einer intensiven Durchmischung unterzogenen Proben wurden anschließend in einem Öl befeuertem Schmelzofen aufgeschmolzen und einer metallurgischen Anreicherung unterzogen. Die dabei notwendige Temperatur blieb in allen Vergleichen metallurgisch betrachtet gleich. Eine Auswertung der spezifischen Verbräuche zeigte keine signifikanten Unterschiede.

| Ergebnisvergleich | Mischung mit Soda | Mischung mit BC-Feuerlöschpulver |
|---|---|---|
| Heizöl | 0,36 - 0,42 l / kg Einsatzmaterial | 0,37 - 0,40 l/kg Einsatzmaterial |
| Sauerstoff | 0,66 - 0,76 m³ / kg Einsatzmaterial | 0,68 - 0,75 m³ / kg Einsatzmaterial |
| Reduktionsmittel | 0,09 kg / kg Einsatzmaterial | 0,09 kg / kg Einsatzmaterial |

In allen Fällen wurde das Raffinationsziel, die PGM's in eine geeignete, weiterverarbeitungsfähige Form zu überführen und aufzukonzentrieren erreicht.

Bei nachfolgenden Prozessschritten zeigten sich keinerlei Unterschiede auf.

Die entstehenden Schlacken wurden ebenfalls einer intensiven Kontrolle unterzogen, wobei sich keine Unterschiede in Bezug auf den PGM - Restinhalt (immer < 0,001 %), das Fließ-, Temperatur- und Abkühlverhalten zeigten. Lediglich die Schlacke, welche aus Materialmischungen mit BC-Pulver stammte, zeigte eine leicht geringere Dichte.

## Patentansprüche

1. Verfahren zur Verwertung von Feuerlöschpulver der Brandklasse BC, **dadurch gekennzeichnet, dass** BC-Pulver in einem thermischen metallurgischen Prozess zum Schmelzen von Rohstoffen als Schlackenbildner und zur Senkung der Schmelztemperatur eingesetzt wird.

2. Verfahren nach Anspruch 1, **dadurch gekennzeichnet, dass** BC-Pulver vollständig oder teilweise als Ersatz von Soda verwendet wird.

3. Verfahren nach Ansprüchen 1 und 2, **dadurch gekennzeichnet, dass** Soda durch BC-Pulver im stöchiometrischen Verhältnis 3 : 1 bis 1 : 10 ersetzt wird.

4. Verfahren nach Anspruch 1, **dadurch gekennzeichnet, dass** ein Masseverhältnis Rohstoff zu BC-Pulver von 1000 : 1 bis 1 : 10 verwendet wird.

5. Verfahren nach Ansprüchen 1 und 4, **dadurch gekennzeichnet, dass** als Rohstoff nichteisenmetallhaltige Materialien vorgesehen sind.

6. Verfahren nach Ansprüchen 1 bis 5, **dadurch gekennzeichnet, dass** Rohstoff und BC-Pulver vor dem Einsatz in das Schmelzaggregat dosiert und vermischt werden.

7. Verfahren nach Ansprüchen 1 bis 5, **dadurch gekennzeichnet, dass** BC-Pulver während des Schmelzprozesses der Schmelze zugeführt wird.
